# EUROPEAN PATENT APPLICATION

(11) **EP 2 433 586 A2**
(43) Date of publication of application: **28.03.2012**
(21) Application number: 11250825.4
(22) Date of filing: 28.09.2011
(51) Int. Cl.: A61C 17/40, A61C 17/34

(54) **Electric toothbrush with variable brush movement**

(30) Priority: 28.09.2010 HK 10109297; 24.06.2011 HK 11106582
(71) Applicant: Hayco Manufacturing Limited, Hong Kong (CN)
(72) Inventor: Ivarsson, Bengt, Hong Kong (HK); Leinweber, Bettina, Hong Kong (HK); Choi, Hei Wai, N.T. Hong Kong (HK); Dycher, David, Shenhen (CN); Spooner, Greg, Hong Kong (HK); Vong, Hoss, N.T. Hong Kong (HK); Mackintosh, James, Sai Kung (HK); Lam, Yee Wah, N.T. Hong Kong (HK); Hishiki, Teruo, Sheung Shui N.T. Hong Kong (HK)
(74) Representative: Every, David Aidan

(57) **Abstract**

A vibratory appliance includes a tool (18) driven to oscillate by a rotary electric motor (13). A shaft (14) supported at an intermediate portion by a pivot (28) is driven by an orbital drive mechanism (31). The orbital drive mechanism includes a rotor (33) rotated about a rotor axis by the motor and an elongate part and a coupler each fixed to a respective one of the inner end (26) and the rotor, the elongate part and coupler (34) being mutually connected for sliding movement relative to one another between first and second relative positions in which the inner end (26) orbits about the rotor axis at first and second orbital radii respectively to thereby vary the amplitude of oscillation of the tool (18).

## Description

### Technical field

The present invention relates generally to vibratory motorised appliances in which the magnitude of displacement of a driven oscillatory tool is variable.

### Background of the Invention

An increasingly large range of types of hand-held electrical appliances are in use. These small appliances may include, for instance, personal care devices used for cleaning, grooming, physical stimulation, skin, hair or oral care, such as brushes, trimmers, razors, and the like, as well as other types of appliances for home or commercial use. In the use of personal care appliances a tool, such as a brush, a massage tool, applicator pad, blade, or the like, is motor-driven to oscillate. While users may readily select an appliance among different models according to a preference for the frequency of tool oscillation, the provision for a variable amplitude of oscillation to suit is less common. Advantageously, it is possible to provide a mild or intense action according to the amplitude of tool movement. Varying the amplitude of tool movement can be achieved in appliances having electromagnetic drives through the use of circuits that control the driving magnetic fields. However these types of control systems are relatively costly, and a need exists for a more inexpensive vibratory appliance which enables the amount of tool movement to be varied according to user preference.

US3945076 and US4149291 describe electric toothbrushes with a transmission shaft for transmitting oscillatory movement to the brush. An outer end of the shaft is fixed to the brush, and an intermediate part of the transmission shaft is supported to pivot freely about two mutually perpendicular transverse axes. By employing a motor for driving the inner end of the shaft to orbit in a circular locus the brush is driven with a like orbital movement. However, unless a current draw limiter is included in the electronic circuit controlling appliances such as this, there is the potential for a high load applied to the tool in use to result in the motor drawing excessive current or stalling. While a current limiter extends battery life and avoids the possibility of overheating and possible damage from a stalled motor, it adds significant cost. It will therefore be understood that there is a need for an improved vibratory appliance which addresses this drawback.

It is an object of the present invention to address the above needs, or more generally to provide an improved vibratory appliance.

### Disclosure of the Invention

According to one aspect of the present invention there is provided a vibratory appliance comprising:
a housing having a handle portion;
a motor in the housing;
a rotor rotated about a rotor axis by the motor;
a shaft having an intermediate portion disposed between opposing inner and outer ends of the shaft, the outer end of the shaft being adapted for oscillating a tool;
a pivot supporting the intermediate portion, such that moving the inner end in an orbital path produces an orbital movement of the outer end, and
an elongate part and a coupler each fixed to a respective one of the inner end and the rotor, the elongate part and coupler being mutually connected for sliding movement relative to one another between first and second relative positions in which the inner end orbits about the rotor axis at first and second orbital radii respectively.

Preferably the vibratory appliance further comprises displacement means moveable relative to the housing to displace the one of the elongate part and coupler relative to the other between the first and second relative positions. Preferably the displacement means is user-controlled, as by operating one or more buttons, switches, grips, knobs or the like for moving the one of the first and second couplers relative to the other, either directly, by an intervening mechanism for example. Alternatively, the displacement means may be driven by an actuator controlled automatically in response, for instance, to a control, or to a current or voltage feedback.

The displacement means preferably comprises a rotary operator which is turned to move either the rotor or the shaft to displace the one of the elongate part and coupler relative to the other. Preferably the displacement means moves the rotor substantially parallel to the rotor axis. Preferably the rotary operator is mounted to turn in a transverse opening in the housing, a nub on the rotary operator offset from the transverse opening is received in a substantially transverse channel connected to the rotor, such that rotation of the rotary operator displaces rotor substantially parallel to the rotor axis. Alternatively, the rotary operator may be connected to the housing by a screw thread having an axis parallel to the longitudinal axis, such that turning the rotary operator displaces the one of the first and second couplers relative to the other.

Preferably the rotor is directly coupled to an output shaft of the motor, and the displacement means moves the motor and rotor together. Alternatively the rotor may be indirectly coupled to the motor shaft, as by one or more speed-change gear sets. It will be understood that displacement of the motor is not essential to the invention and, for instance, a splined joint could be provided between the motor output shaft and the one of the first and second couplers to accommodate the displacement. Preferably the housing further comprises guides aligned with the rotor axis and engaged with the motor for guiding movement of the motor.

Preferably the coupler comprises a spherical bearing. Preferably the pivot comprises a spherical bearing, or a resilient member extending about the shaft, such as an elastic bushing, a diaphragm or a spring. It will be understood that other types of couplers may be used to accommodate the two-axis pivoting movement, such as a universal type coupling.

Preferably the elongate part is disposed on the rotor, and the coupler is disposed on the inner end of the shaft. The elongate part is preferably acutely inclined to the rotor axis. Preferably the elongate part comprises a stem fixed to the rotor. Preferably the coupler comprises a spherical bearing, and the stem is slidingly received in an aperture extending centrally through a ball element of the spherical bearing. Preferably a proximal end of the stem is fixed to the rotor and the stem has an opposing free end, wherein the proximal end is preferably eccentric.

Optionally the elongate part may comprise a channel in the rotor, and the coupler comprises a spherical bearing fixed to the inner end of the shaft and slidingly received in the channel for longitudinal movement along the channel.

Preferably the housing is elongate and encloses the pivot, rotor, elongate part and coupler, and further comprising the tool, the tool being connected at a longitudinal end of the housing.

The tool may have a resilient neck by which it is connected to the longitudinal end of the housing. Preferably the outer end of the shaft projects from the one longitudinal end of the housing.

Preferably the outer end of the shaft is received in a cavity in the tool, the cavity having a form complementary to the outer end of the shaft. Preferably the resilient neck is disposed adjacent the pivot.

Preferably the tool is a brush, or a stimulator. The invention provides a vibratory appliance which is effective and efficient in operational use, which has provision for varying the amount of tool movement completed in each cycle of oscillation according to user requirements or preferences. New users can start use with a low setting, with a relatively low amount of movement, allowing them to be gently introduced to using a motorised vibratory appliance with a minimum of discomfort. Moreover, the vibratory appliance has an overall simple design which minimizes manufacturing costs and maximizes performance.

Preferably the first orbital radius is greater than the second orbital radius, the appliance further comprising resilient means for urging the elongate part and coupler toward the first relative position. Preferably the resilient means comprises a diaphragm which also comprises the pivot. Alternatively, a pivot (such as a spherical bearing) may be provided, cooperating with resilient means in the form of one or more springs for urging the elongate part and coupler toward the first relative position.

Preferably the resilient means comprises one resilient member. Optionally the resilient means may comprise two or more cooperating resilient members.

Preferably the resilient member includes an aperture extending therethrough, the transmission shaft is fixed in engagement with an inner surface of the aperture, and an output surface of the resilient member is secured to the housing.

Preferably the transmission shaft includes a shoulder in engagement with the inner surface of the aperture.

Preferably the resilient member has first and second stiffnesses for axial movement along first and second mutually perpendicular transverse axes respectively, which first and second stiffnesses are substantially the same. Optionally, the first and second stiffnesses for axial movement are different.

Preferably the resilient member has first and second torsional stiffnesses for rotation about mutually perpendicular transverse axes respectively, which first and second torsional stiffnesses are substantially the same. Optionally, the first and second torsional stiffnesses are different.

The first and second stiffnesses for axial movement and the first and second torsional stiffnesses may be altered, for instance, by variations in the thickness of the resilient member in the axial direction, by the provision of apertures, slits, slots, ribs, channels, protrusions or other features of the resilient member.

Preferably the resilient means comprises an annular diaphragm.

Preferably the annular diaphragm is integral with a hub and output ring, the hub and output ring having greater thickness in the axial direction than the annular diaphragm.

Preferably the first coupler comprises a driven shaft having a fixed end fixed to the driven member and an opposing free end, and the second coupler comprises a spherical bearing slidably engaged with the driven shaft.

Preferably the driven shaft is linear and extends acutely to the axis.

Preferably the eccentricity of the driven shaft increases between the fixed end and the free end, and the resilient means urges the spherical bearing toward the free end.

Preferably the resilient means urges the transmission shaft to extend from the housing. Advantageously, as the user increases the load applied to the tool the amplitude or amount of movement of the tool is reduced, owing to the axial compliance of the resilient means that allows movement of the locus to the first position. With this reduced movement the torque applied to the electric motor is reduced, avoiding the stall torque being reached. Moreover, the vibratory appliance has an overall simple design which minimizes manufacturing costs and maximizes performance.

Preferably at least a portion of the shaft has first and second bending stiffnesses for bending about respective ones of two mutually perpendicular axes transverse to a longitudinal axis of the at least a portion of the shaft, the first bending stiffness being substantially greater than the second bending stiffness such that the outer end follows an elliptical orbit. In this way flexure about one of the two mutually perpendicular axes predominates, and although this relative bending flexibility is preferably achieved by selection of the shape of the cross-section this could alternatively be achieved, for instance, by a resilient member surrounding the at least a portion of the shaft.

Preferably the at least a portion of the shaft is disposed between the inner end and the pivot. It is of course well known from beam theory that a shaft that is relatively more flexible in bending may have a relatively lower modulus of elasticity and/or a relatively lower second moment of area. Preferably the at least a portion of the shaft comprises a flat strip, or another member having a different second moment of area about each of the two mutually perpendicular axes. The flat strip has a major axis aligned with the major axis of the elliptical path traced by the tool.

In a second aspect the invention provides a vibratory appliance comprising:
a rotor rotated about a rotor axis by an electric motor;
a shaft having an intermediate portion disposed between opposing inner and outer ends of the shaft, the outer end of the shaft being adapted for oscillating a tool;
a pivot supporting the intermediate portion, such that driving the inner end of the shaft in an orbital path produces an orbital movement of the outer end;
first and second couplers each fixed to a respective one of the inner end and the rotor, the first and second couplers being mutually connected such that the inner end orbits about the rotor axis, and
wherein at least a portion of the shaft has first and second bending stiffnesses for bending about respective ones of two mutually perpendicular axes transverse to a longitudinal axis of the at least a portion of the shaft, the first bending stiffness being substantially greater than the second bending stiffness such that the outer end follows an elliptical orbit.

Preferably the at least a portion of the shaft is disposed between the inner end and the pivot, and preferably it comprises a flat strip. Preferably the shaft comprises a solid bar portion fixed at one end to the flat strip and extending through the pivot to the outer end.

It will be understood that the first coupler may comprise an elongate part, the elongate part and second coupler being mutually connected for sliding movement relative to one another between first and second relative positions in which the inner end orbits about the rotor axis at first and second orbital radii respectively. This feature, and the other features described above, are also preferred features of a vibratory appliance according to the second aspect of the invention.

### Brief Description of the Drawings

Preferred forms of the present invention will now be described by way of example with reference to the accompanying drawings, wherein:
Figure 1 is a schematic longitudinal section through a vibratory appliance according to a first embodiment of the invention;
Figure 2 is an exploded pictorial view of the vibratory appliance of Fig. 1;
Figure 3 is a fragmentary longitudinal section through the drive mechanism of the vibratory appliance of Fig. 1;
Figure 4 is an isometric view of a transmission shaft assembly of a vibratory appliance according to a second embodiment of the invention;
Figure 5 is a first longitudinally sectioned view showing the transmission shaft assembly of Fig. 4 inverted;
Figure 6 is a second longitudinally sectioned view of the transmission shaft assembly of Fig. 4;
Figure 7 is an exploded isometric view of a vibratory appliance according to a second embodiment of the invention;
Figure 8 is an isometric view of the drive mechanism of the vibratory appliance of Fig. 4;
Figure 9 is a fragmentary longitudinal section through the drive mechanism of
Fig. 7;

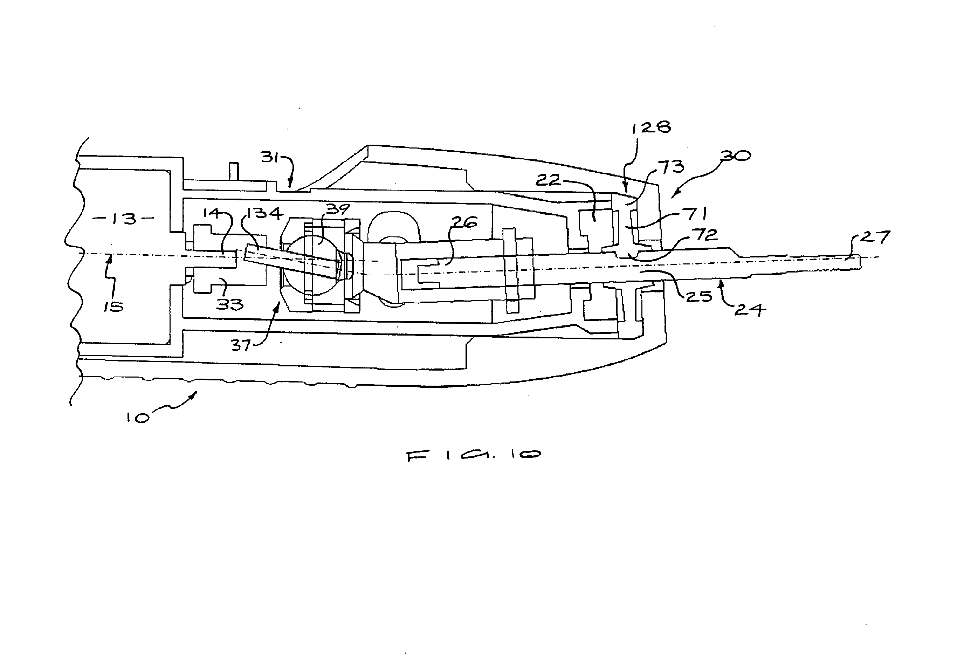

Figure 10 is a schematic longitudinal section through a vibratory appliance according to a third embodiment of the invention;

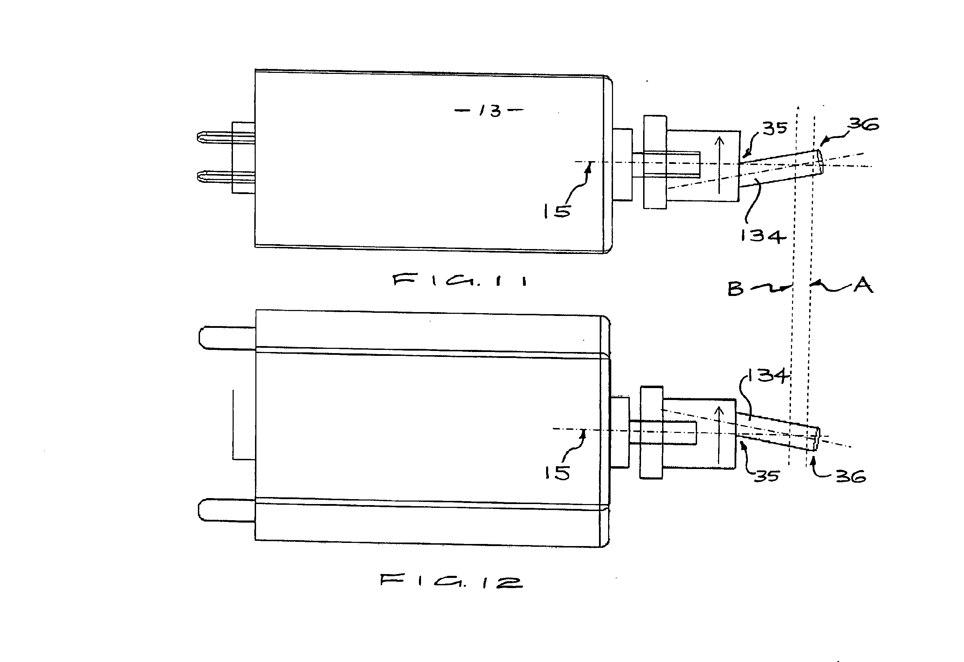

Figures 11 and 12 are top plan and side elevations respectively of the motor and driven member of the appliance of Fig. 10;

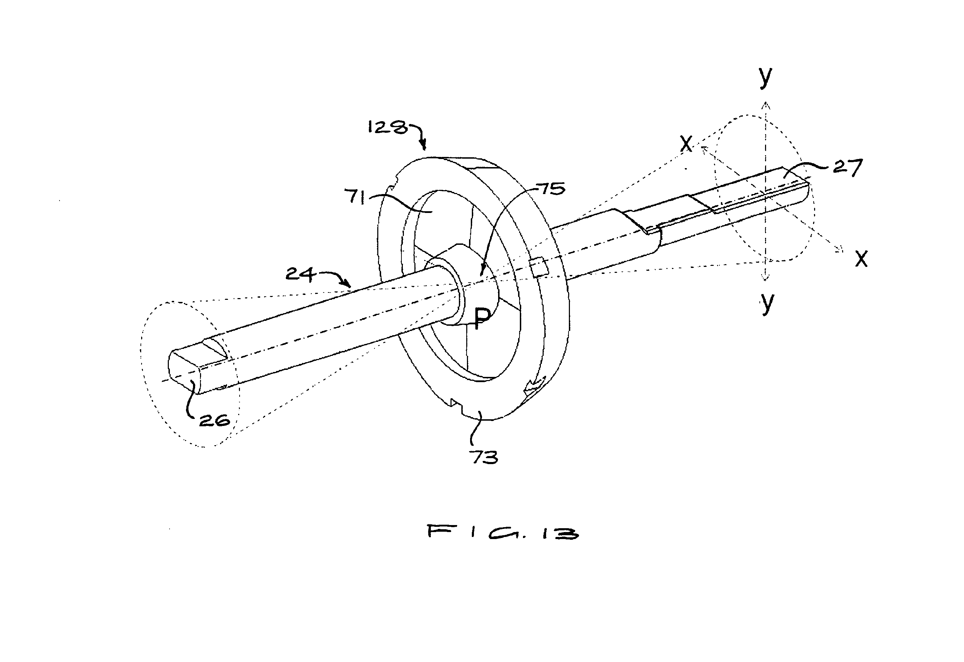

Figure 13 is an isometric view of a transmission shaft and resilient member of the vibratory appliance of Fig. 10, and

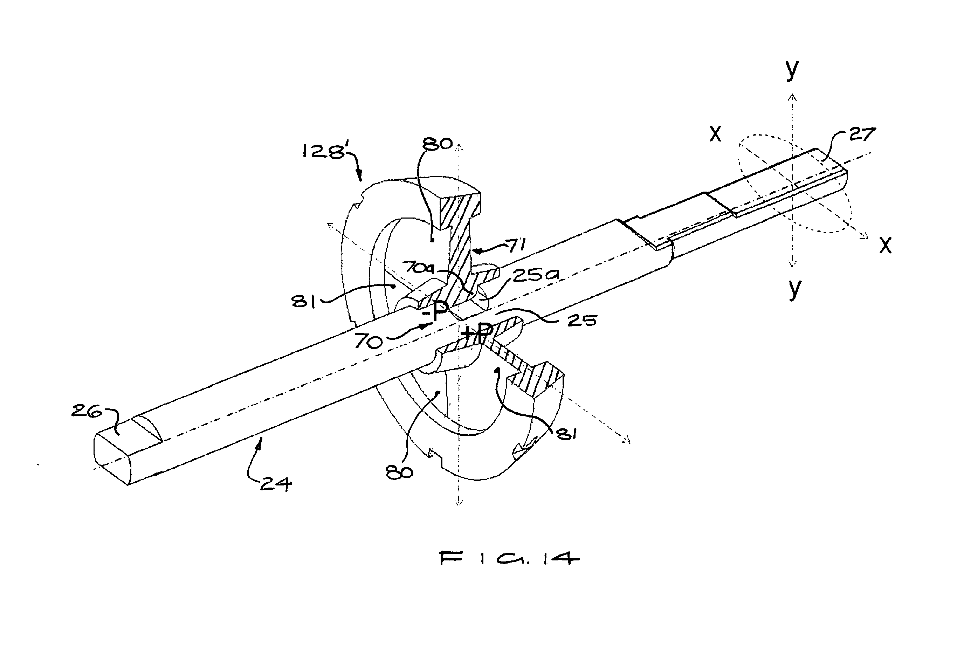

Figure 14 is an isometric view of an alternative transmission shaft and resilient member of the vibratory appliance of Fig. 10.

### Description of the Preferred Embodiments

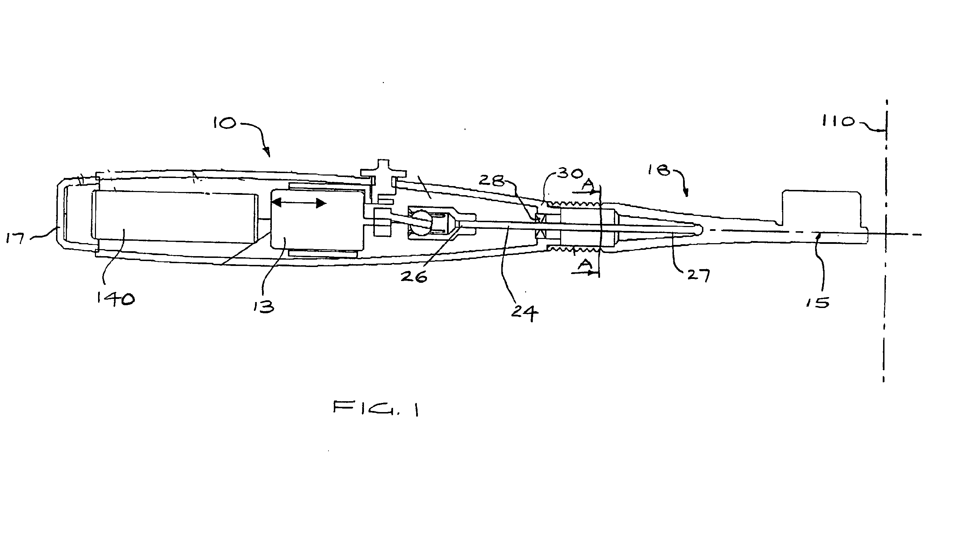

Referring to Figs 1-3, a first embodiment of a vibratory appliance according to the invention is a toothbrush having a housing 10, which may comprise a pair of elongate shells 11, 12 joined generally at a longitudinal plane. The housing 10 includes a handle portion and encloses a rotary motor 13, and may also hold batteries 140 for powering the motor. The motor 13 has a rotating output shaft 14 with an axis 15 which may extend longitudinally. A cap 17 and a tool in the form of a brush 18 are mounted to the longitudinally opposing ends of the housing 10. Guides are provided for allowing the motor to move longitudinally within the housing 10, and may comprise tongues 16 on opposing sides of a mount 19 to which the motor 13 is fixed. Each tongue is slidingly received in a complementary linear groove (not shown) in the inner side of the shells 11 and 12.

The brush 18 may be a replaceable member having bristles 19 fixed in a bristle block 20 at its outer end. A resilient portion 21 disposed at the inner end of the brush 18 may be provided for connecting an elongate stem to the bristle block 20. In the embodiment shown, the brush 18 is able to pivot, as by flexure about the resilient portion 21, which provides a resilient hinge. A longitudinal cavity 22 in the brush 18 has an open mouth at the inner end of the brush and a blind end 23. As described further below with reference to the orbital drive mechanism, the brush 18 is driven to move in an orbital path in a plane 110 orthogonal to the axis 15.

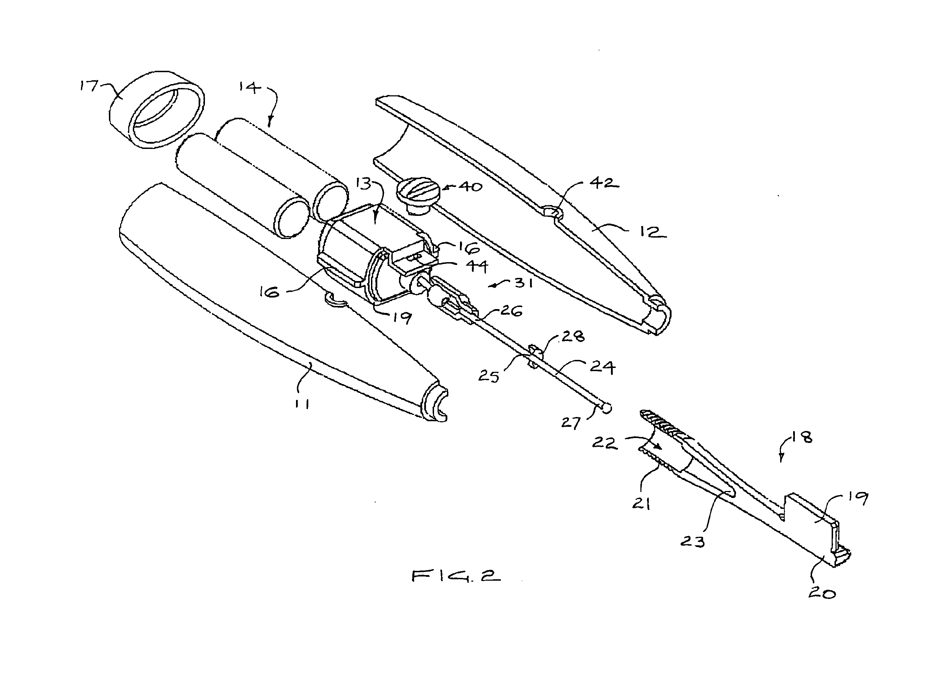

A transmission shaft 24 is elongated longitudinally and has an intermediate portion 25 between opposing inner and outer ends 26 and 27 respectively. A resilient bush provides a pivot 28 held in a neck 30 of the housing 10 and which extends about the intermediate portion 25. The pivot 28 provides a fulcrum about which the transmission shaft 24 pivots and a seal, closing the outer end of the housing. The outer end 27 of the shaft extends into the cavity 22 and may have a ball formed thereon, with a shape complementary to the blind end 23 in which it is engaged. The inner end 26 is connected to an orbital drive mechanism 31, such that the transmission shaft 24 and pivot 28 provide a transmission for transmitting oscillatory movement to the brush. The transmission shaft 24 may have a substantially constant cross section throughout its length, for instance a circular section as shown in Fig. 2.

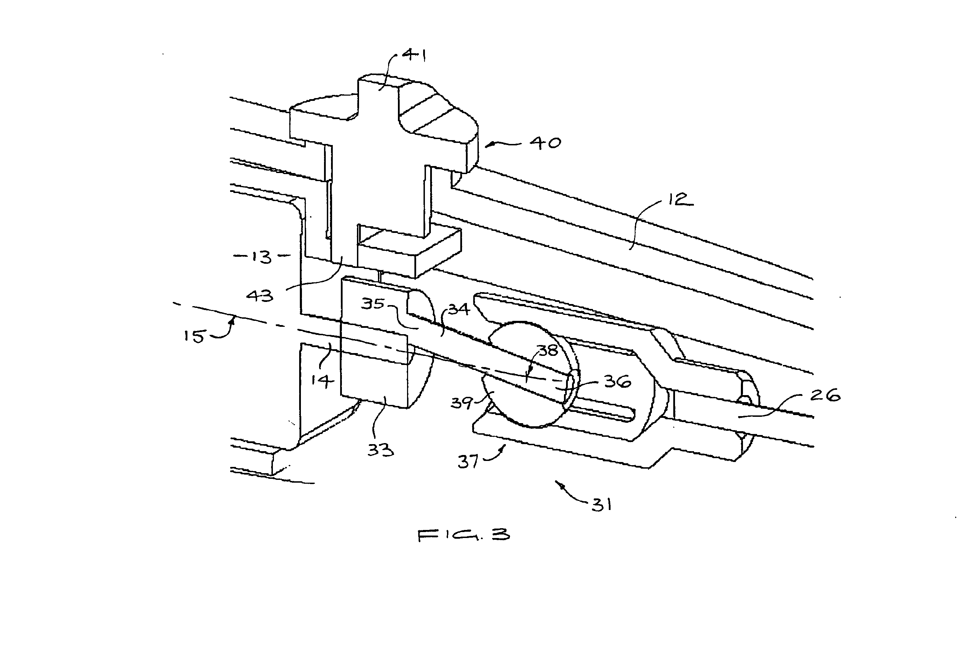

The orbital drive mechanism 31 includes a driven member or rotor 33 fixed to rotate with the motor shaft 14, and in which the motor shaft 14 may be received. A first coupler in the form of a stem 34 is fixed to the rotor 33 in a cantilever manner, such that the shaft extends generally longitudinally. The proximate end 35 of the rotor stem 34 is disposed eccentrically relative to the axis 15. The axis of rotor stem 34 may be linear and inclined acutely relative to the axis 15, such that the eccentricity of the distal end 36 of the shaft is less than that of the proximal end 35. The drive mechanism 31 further includes a second coupler in the form of a spherical bearing 37 fixed to the inner end of the transmission shaft 24. The spherical bearing 37 is slidingly engaged with the rotor stem 34 for longitudinal movement along the rotor stem 34 and accommodates the differing angles between the transmission shaft 24 and rotor stem 34, as the shaft is displaced angularly. The spherical bearing 37 is connected to the end of the transmission shaft 24 and when positioned eccentrically it has a circular locus 38. In the position illustrated in Fig. 3, the locus 38 lies on the axis 15 thus providing no eccentricity, and consequently no transverse oscillatory movement of the shaft end 26 when the motor shaft 14 rotates. The locus 38 is moved (along the axis of the rotor stem 34) by relative sliding movement of the spherical bearing 37 along the rotor stem 34, the rotor stem 34 being in sliding engagement with an aperture extending centrally through the ball element 39, which increases the eccentricity of the locus 38, and consequently increases the orbital radius of the inner end 26 when the motor shaft 14 rotates.

Displacement means are provided for moving the rotor stem 34 relative to the spherical bearing 37 to vary the orbital radius of the inner end 26 and thus the amount of oscillation of the brush 18. Exemplary displacement means shown in Figs 1-3 comprise a rotary operator 40 having a knob 41 by which it may be grasped by the user. The rotary operator 40 is mounted to turn in a transverse opening 42 in the housing 10. An eccentric nub 43 on the rotary operator 40 is offset from the axis of the transverse opening 42. The nub 43 is received in a substantially transverse channel 44 in the motor mount 19, such that turning the rotary operator 40 displaces the motor 13, rotor 33 and the rotor stem 34 longitudinally.

In use, the operator may rotate the rotary operator 40 to select a desired amount of brush movement. Friction or other detent means may hold the rotary operator 40 in any user-selected angular position. The brush 18 and fulcrum pivot 28 are engaged with the shaft, and may cooperate to urge the transmission shaft 24 to its undisplaced position, aligned with the axis 15 (as shown in Fig. 3). The locus 38 follows circular paths of an orbital radius that increases with the eccentricity of the locus 38.

In the case in which the transmission shaft 24 has a circular cross section (as per Fig. 2) and its bending is unrestricted, the bending stiffness of the transmission shaft 24 is the same, independent of the direction of the bending load, and so the circular path followed by the locus 38 and inner end 26 impels the outer end 27 to follow a circular path, deflecting the brush about the resilient hinge portion 21, and producing a circular orbital movement of the bristles 19.

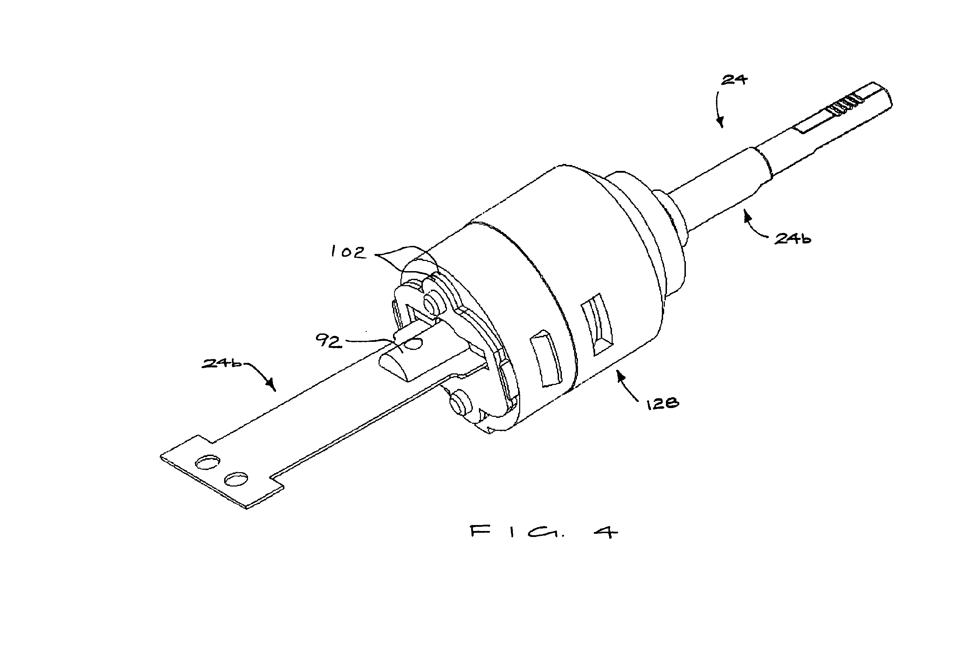

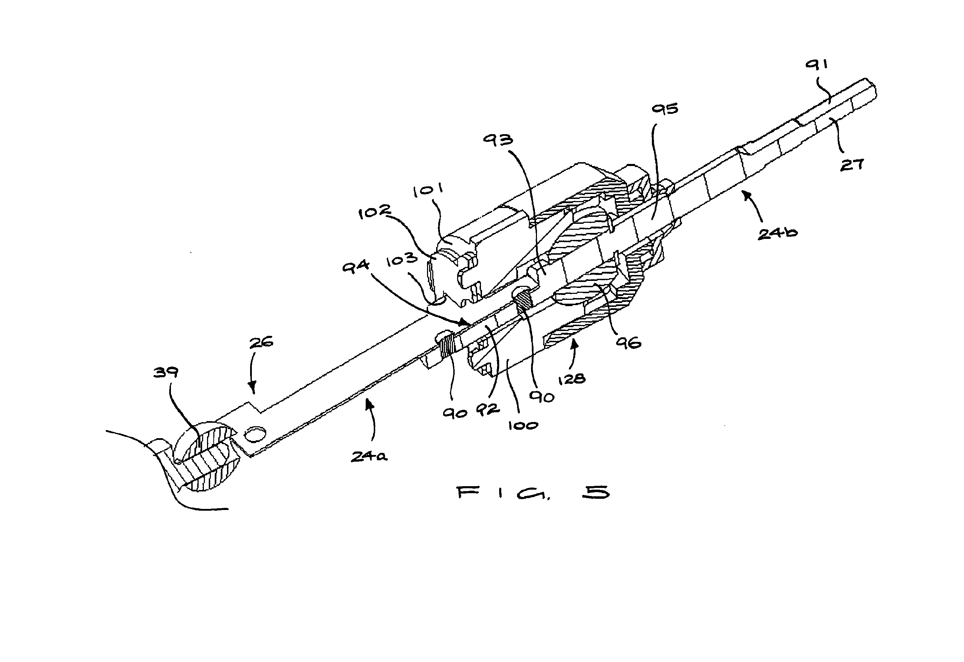

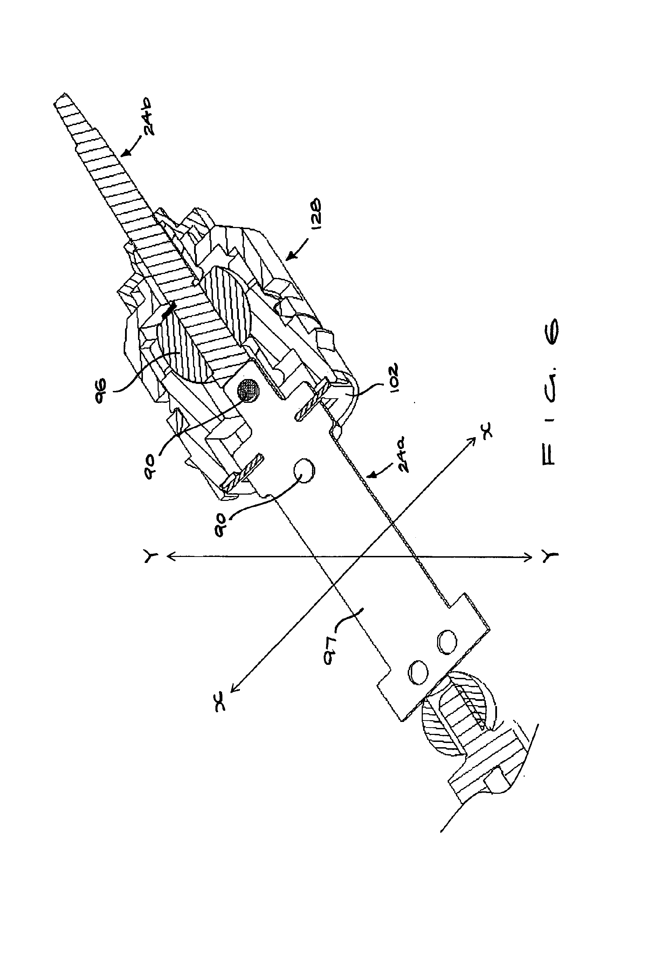

Figs 4 to 6 illustrate a second embodiment of the invention in which the pivot comprises a spherical bearing 128 and in which the shaft 24 is a composite member comprising longitudinally extending inner and outer portions 24a, 24b which are mutually connected, as by rivets 90. The outer portion 24b has an outer end 27 which may comprise flat faces 91 and which is of a form complementary to a cavity in a toothbrush attachment (not shown) such that movement of the outer end 27 moves the toothbrush attachment directly. In this embodiment, the brush (not shown) may be fixed only to the shaft 24, without a resilient portion 21 disposed at the inner end of the brush 18 in engagement with the housing 10. The inner end 92 of the outer portion 24b is separated from the adjacent central part 95 by a shoulder 93 and has a reduced cross-sectional area compared to the adjacent central part 95. A longitudinally extending flat face 94 on the inner end 92 may be provided, abutting the inner portion 24a. The central part 95 may extend longitudinally through the ball element 96 of the spherical bearing 128. The central part 95 may have a generally constant cross-sectional form throughout its length, such as a circular cross-section.

The orbital drive mechanism 31 is of like construction to the first embodiment and the inner end 26 of the inner portion 24a is connected to the spherical bearing 37 at the end of the shaft 24, while the opposing end is fixed to the outer portion 24b. The inner portion 24a may comprise a thin, flat strip, which may further comprise a waisted central portion 97 of generally constant cross-sectional form throughout its length. The central portion 97 is substantially stiffer in bending about axis YY than about axis XX, and thus as the inner end 26 orbits there is substantial flexure about axis XX which tends to absorb one component of the orbital movement, while the negligible flexure about axis YY means the other component is transmitted. The central portion 97 is also substantially more flexible in bending about axis XX than the substantially rigid outer portion 24b. As a result the outer end of the shaft 24 follows an elliptical orbit, the major axis of which is aligned with the plane of the central portion 97 and the axis XX. By selecting between different cross sections for the transmission shaft 24, the bending stiffness of the shaft, and consequently the resulting orbital oscillation of the bristles 19 may be made more ellipstical, flattening the output movement such that it is predominantly in a preferred direction. In the embodiment shown the major axis of the ellipse comprises side-to-side bristle movement, with only a minor in-and-out component of movement is provided

The spherical bearing 128 comprises a body 100 through which the shaft 24 extends. The inner end of the outer portion 24b may project inwardly from an inner end 101 of the body 100. One or more plates 102 may be fixed to the inner end 101, each with an aperture 103 through which the shaft 24 extends. The properties of these plates 102, including their materials and dimensions (thickness, axial position size of the aperture 103 etc) may be varied to vary the elliptical movement, to achieve a desired output. The shaft 24 abuts the aperture 130, restricting its bending deflection and this allows for tuning of the output, particularly near resonant frequencies. In preferred embodiments, the elliptical output movement of the outer end of the shaft 24 may vary between 1:1.5 to 1:4 (the ratio of the displacements in two mutually orthogonal directions in the plane of the movement).

Compared to the first embodiment, the tool moves in a generally elliptical pattern, as opposed to a circle, so that the bristles 19 ultimately move side to side in an ellipse having its major axis extending parallel with the plane of the user's teeth a greater distance than in and out. This movement of the tool imparted by the orbital mechanism defines a roughly elliptical path having a major axis extending substantially parallel with the plane of the user's teeth.

The paths described herein may not precisely be elliptical as technically defined, but may be any of a variety of oblong closed loops. Further modification of the motion of the shaft 24 may be made by further restricting the ability of the shaft 4 to move, in any number of manners. The pattern of motion of the shaft 24 can be further modified by other adjustments to the physical surroundings of the shaft 24. For example, the shaft 24 could be designed to have differing compression characteristics on different sides (as opposed to symmetrical compression characteristics as described above). Further, resilient restraints, for example, extending externally about the shaft, could be used to modify the motion as desired.

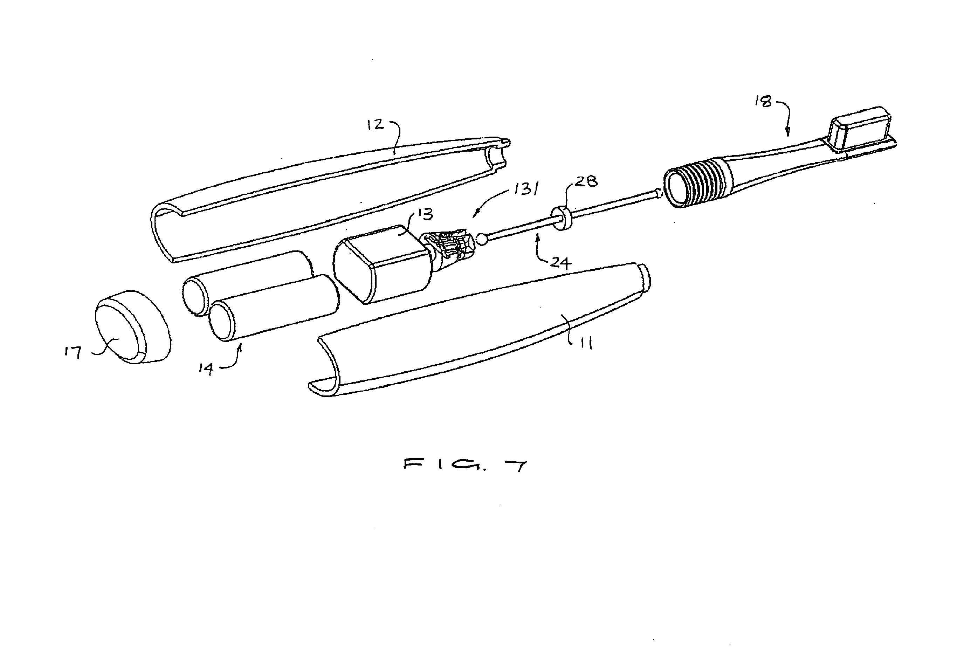

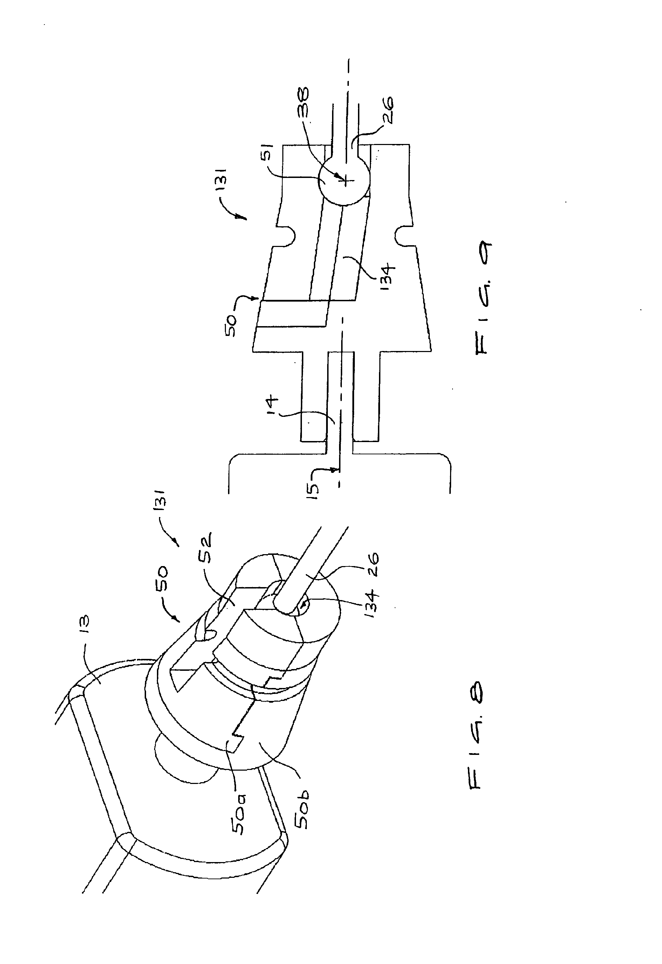

Figs 7-9 illustrate a third embodiment of a vibratory appliance according to the invention which incorporates an orbital drive mechanism 131 employing an operating principle like that of the orbital drive mechanism 31, including couplers mutually connected at a locus 38 that is moveable between positions having different orbital radii or eccentric distances relative to the drive axis 15. With the exception of the different orbital drive mechanism 131 the toothbrush may otherwise be of like construction to the first embodiment. The first coupler is provided in the form of an elongate channel 134 formed in a rotor 50 fixed to the motor shaft 14, and in which the end of the motor shaft 14 may be received. The rotor 50 may be formed from two moulded polymeric parts 50a, 50b connected together. The channel 134 extends generally longitudinally and has a circular cross-section complementary to a ball bearing 51 disposed on the shaft end 26, the ball bearing 51 providing the second coupler. A longitudinal slot 52 may extend into the channel 134, but the width of the slot 52 is less than that of the channel 134, so that the ball 51 is constrained to move along the channel 134. The inner end 35 of the axis of the channel 134 is disposed eccentrically relative to the axis 15. The axis of the channel 134 may be linear and inclined acutely relative to the axis 15, such that the eccentricity of the ball 51 when disposed in the outer end of the channel 134 is less than that when the ball is located in the inner end of the channel 134, and the eccentricity increases as the transmission shaft 24 and motor 13 come closer together. The bearing 51 is slidingly engaged within the channel 134 for longitudinal movement along the channel 134 and accommodates the differing angles, as the shaft is pivoted and displaced axially. The channel 134 and ball bearing 51 are mutually connected at a locus 38 defined by the centre of the ball bearing 51. In the position illustrated the locus 38 lies on the axis 15 thus providing no eccentricity, and consequently no transverse oscillatory movement of the shaft end 26 when the motor shaft 14 rotates. The locus 38 is moved (along the axis of the channel 134) by relative movement of the ball bearing 51 along the channel 134 which increases the orbital radius of the locus, and consequently increases transverse oscillatory movement of the shaft end 26 when the motor shaft 14 rotates.

Figs 10-14 illustrate a fourth embodiment of a vibratory appliance according to the invention, in which like reference numbers are used to refer to like components. The housing 10 encloses a rotary motor 13, having a rotating drive output 14 received in and fixed to a driven member or rotor 33 having a longitudinal axis 15. Unlike the first and second embodiments, there is no provision made for movement of the rotor 33 (with the attached shaft 14 and motor 13) relative to the transmission shaft 24, although it is to be understood that such provision such as the previously described adjustment mechanism may also be included. The outer end 27 of the transmission shaft 24 protruded from the housing 10 and may be profiled for fastening with a complementary recess in a tool (not shown).

With reference to Figs 10 and 13, it is shown that the pivot 128 comprises a resilient bush with a central aperture 70 in which the intermediate portion 25 of the transmission shaft 24 is received. The central aperture 70 and intermediate portion 25 have respective shoulders 70a, 25a which are mutually engaged to fix the bush 128 to the transmission shaft 24. The bush 128 may be formed from a flexible, resilient material, such as an elastomer, as by over-moulding the bush 128 over the intermediate portion 25. The aperture 70 is formed in a hub 72 of the bush 128. The hub 72 is connected by an annular diaphragm 71 to an output ring 73. The output ring radially offset from the aperture 70 is engaged with the housing such that it is axially located.

The transmission shaft 24 is resiliently mounted by the bush 128, and tends to restore the shaft to a predetermined position, providing compliance for movement along first and second mutually perpendicular transverse axes XX, YY, torsional compliance for rotation about the axes XX, YY, as well as longitudinal compliance along axis 15. As described further below with reference to Fig. 14, the shape of the bush 128, particularly of the diaphragm 71 may be varied to tune the response in respect of these different degrees of freedom.

The orbital drive mechanism 31 is of like construction to the first embodiment, including rotor 33 driven, as by direct coupling shown to the motor shaft and in which the ball 39 is coupled to reciprocate along the rotor stem 34. The rotor stem 134 is also straight and acutely inclined to the drive axis 15, but as best seen in Figs 11 and 12, an eccentricity of the distal end 36 is greater than an eccentricity of the proximal end 35. The rotor stem 134 may be inclined as shown, such that its axis does not lie in a longitudinal plane intersecting the drive axis 15. In Fig. 7, the spherical bearing 37 is shown at a first position axially disposed along the driven shaft 134 which provides the operating eccentricity, and the design vibratory movement of the tool when it is fixed to the transmission shaft 24. Owing to this eccentricity the spherical bearing 37 has a circular locus, the diameter of which varies according to the position of the spherical bearing 37 along the rotor stem 134. The first position is indicated schematically by the dashed line A in Figs. 11 and 12, where the line B indicates a second position, in which the spherical bearing 37 is moved axially toward the proximal end 35, and which reduces the eccentricity of the spherical bearing 37.

Fig. 13 illustrates the simplified or idealised movement of the transmission shaft 24, in which the inner and outer ends orbit in circular paths, with the shaft 24 pivoting about a virtual centre 75 at the intersection of the XX and YY axes. This movement is approximated when there is no, or negligible movement, of the centre 75 in the XX or YY directions. This may be achieved by providing the diaphragm 71 of uniform material properties and flat form, symmetric about the axis of the transmission shaft 24. It may be noted that Fig. 10 shows the axis of the transmission shaft 24 skewed relative to the drive axis 15, by a small angle of approximately 4 degrees, but it will be understood that this angle may be varied, depending upon the tool, for instance, and is not an essential feature of the design.

Fig. 14 illustrates a resilient bush 128' having form is varied by varying the thickness of the diaphragm 71, in a generally symmetrical manner, such that the opposing portions 80, disposed either side of the axis YY, are thicker than the opposing portions 81 disposed either side of the axis XX. The inner end of the transmission shaft 24 has a circular locus, but by varying the form of the diaphragm 71 in this manner, the outer end 27 (and attached tool) may be driven with an elliptical movement. The resilient bush 128' is shown in Fig. 11 with a quadrant cut away to illustrate this variation in thickness. In this manner, the torsional stiffness of the diaphragm 71 for rotation about axis XX, and the stiffness of the diaphragm 71 for axial movement along axis YY, are greater than the torsional stiffness of the diaphragm 71 for rotation about axis YY, and the stiffness of the diaphragm 71 for axial movement along axis XX.

In use, the bush 128, 128' deforms resiliently to permit axial movement of the transmission shaft 24, while urging the transmission shaft 24 and attached spherical bearing 37 to a position that the eccentricity of the spherical bearing 37 is a maximum, and thus the amplitude of oscillation of the outer end of the transmission shaft 24 is a maximum. Should the loading applied to the tool in use, and consequently the torque applied to the motor, become excessive, then the axial compliance provided by the bush allows the end of the transmission shaft 24 and spherical bearing 37 to be displaced to a position of reduced eccentricity, thereby reducing the current drawn by the motor.

Aspects of the present invention have been described by way of example only and it should be appreciated that modifications and additions may be made thereto without departing from the scope thereof.

## Claims

1. A vibratory appliance comprising:
a housing having a handle portion;
a motor in the housing;
a rotor rotated about a rotor axis by the motor;
a shaft having an intermediate portion disposed between opposing inner and outer ends of the shaft, the outer end of the shaft being adapted for oscillating a tool;
a pivot supporting the intermediate portion, such that moving the inner end in an orbital path produces an orbital movement of the outer end, and
an elongate part and a coupler each fixed to a respective one of the inner end and the rotor, the elongate part and coupler being mutually connected for sliding movement relative to one another between first and second relative positions in which the inner end orbits about the rotor axis at first and second orbital radii respectively.

2. The vibratory appliance of claim 1 further comprising displacement means moveable relative to the housing to displace the one of the elongate part and coupler relative to the other between the first and second relative positions.

3. The vibratory appliance of claim 2 wherein the rotor is directly coupled to an output shaft of the motor, and the displacement means moves the motor and rotor together.

4. The vibratory appliance of any of the preceding claims wherein the elongate part is disposed on the rotor, and the coupler is disposed on the inner end of the shaft, the elongate part preferably being acutely inclined to the rotor axis.

5. The vibratory appliance of any of the preceding claims wherein the coupler comprises a spherical bearing, and the stem is slidingly received in an aperture extending centrally through a ball element of the spherical bearing.

6. The vibratory appliance of any of the preceding claims wherein the housing is elongate and encloses the pivot, rotor, elongate part and coupler, and further comprising the tool, the tool being connected at a longitudinal end of the housing, and wherein the tool preferably has a resilient neck by which it is connected to the longitudinal end of the housing.

7. The vibratory appliance of claim 1 wherein the first orbital radius is greater than the second orbital radius, and further comprising resilient means for urging the elongate part and a coupler toward the first
relative position.

8. The vibratory appliance of claim 7 wherein the resilient means comprises a diaphragm which also comprises the pivot.

9. A vibratory appliance comprising:
a rotor rotated about a rotor axis by an electric motor;
a shaft having an intermediate portion disposed between opposing inner and outer ends of the shaft, the outer end of the shaft being adapted for oscillating a tool;
a pivot supporting the intermediate portion, such that driving the inner end of the shaft in an orbital path produces an orbital movement of the outer end;
first and second couplers each fixed to a respective one of the inner end and the rotor, the first and second couplers being mutually connected such that the inner end orbits about the rotor axis, and
wherein at least a portion of the shaft has first and second bending stiffnesses for bending about respective ones of two mutually perpendicular axes transverse to a longitudinal axis of the at least a portion of the shaft, the first bending stiffness being substantially greater than the second bending stiffness such that the outer end follows an elliptical orbit.

10. The vibratory appliance of claim 9 wherein the at least a portion of the shaft is disposed between the inner end and the pivot.

11. The vibratory appliance of claim 9 or claim 10 wherein the at least a portion of the shaft comprises a flat strip.

12. The vibratory appliance of claim 11 wherein the shaft comprises a solid bar portion fixed at one end to the flat strip and extending through the pivot to the outer end.

13. The vibratory appliance of any of claims 9 to 12 wherein the first coupler comprises an elongate part, the elongate part and second coupler being mutually connected for sliding movement relative to one another between first and second relative positions in which the inner end orbits about the rotor axis at first and second orbital radii respectively.

14. The vibratory appliance of claim 13 further comprising displacement means moveable relative to the housing to displace the one of the elongate part and coupler relative to the other between the first and second relative positions.

15. The vibratory appliance of claim 13 or claim 14 wherein the first orbital radius is greater than the second orbital radius, and further comprising resilient means for urging the elongate part and a coupler toward the first relative position, the resilient means preferably comprising a diaphragm which also comprises the pivot.
